# EUROPEAN PATENT SPECIFICATION

(11) **EP 1 893 659 B1**
(45) Date of publication and mention of the grant of the patent: **01.10.2008**
(21) Application number: 06769984.3
(22) Date of filing: 03.05.2006
(51) Int. Cl.: C08F 291/02, C08F 265/04, C08F 285/00

(54) **IMPACT-MODIFIED MOLDING COMPOSITION AND METHOD**
AUFPRALLMODIFIZIERTE FORMZUSAMMENSETZUNG UND VERFAHREN
COMPOSITION DE MOULAGE RESISTANT AUX CHOCS ET PROCEDE ASSOCIE

(30) Priority: 26.05.2005 US 138551
(43) Date of publication of application: 05.03.2008
(73) Proprietor: Sabic Innovative Plastics IP B.V., 4612 PX Bergen op Zoom (NL)
(72) Inventor: DHAWAN, Sandeep, Vienna, WV 26105 (US); BERZINIS, Albin, Peter, Delmar, NY 12054 (US); KALYANARAMAN, Viswanathan, Athens, OH 45701 (US)
(74) Representative: Gesthuysen, von Rohr & Eggert
(86) International application number: PCT/US2006/016988
(87) International publication number: WO 2006/127223

(56) References cited:
- EP-A- 0 861 860
- EP-A- 1 245 597
- US-A- 5 252 666

## Description

The present invention is directed to compositions comprising rubber modified thermoplastic resins and a method for preparing said compositions. In a particular embodiment the present invention is directed to compositions comprising an acrylic-styrene-acrylonitrile (ASA) resin comprising structural units derived from at least one vinyl aromatic monomer and at least one monoethylenically unsaturated nitrile monomer.

For reasons of an excellent balance of impact strength, flow and chemical resistance a wide variety of commercial rubber-modified blends are based on styrene-acrylonitrile (SAN) copolymers. The widest commercial utility of such products is found when the rubber impact modifier phase is polybutadiene (PBD) to create the family of resins known as ABS. In order to improve the retention of impact strength and appearance upon outdoor exposure, styrene-acrylonitrile compositions comprising at least one alkyl acrylate, such as poly(butyl acrylate) (PBA) rubbers, are prepared, known as ASA (acrylic-styrene-acrylonitrile) resins. ASA resins further comprising structural units derived from methyl methacrylate exhibit improvement in color stability on exposure to real or simulated outdoor aging, and also excellent retention of surface gloss under the same conditions.

ASA compositions, however, are known to be sensitive to molding conditions. Higher melt and mold temperatures beneficially provide a higher gloss, lower haze and better surface color properties. Unfortunately, molding such compositions at higher temperature also increases the cycle time as the molded composition must reside in the mold cavity for a longer time for cooling before ejection. Thus, the number of parts produced per hour goes down, and the overall cost per molded part increases. Due to the cost increase, molders prefer to process such compositions at lower melt and mold temperatures which results in poor surface aesthetics in molded parts comprising ASA. Therefore, a problem to be solved is to devise an efficient method for retaining good surface aesthetics in molded parts comprising ASA while molding at low mold temperature to provide minimal loss in molding productivity.

### BRIEF DESCRIPTION OF THE INVENTION

The present inventors have discovered a method for preparing molded parts comprising ASA with good surface aesthetics while preserving high productivity in the molding process. In a particular embodiment the present invention relates to a method for preparing an acrylic-styrene-acrylonitrile (ASA) resin comprising a discontinuous elastomeric phase dispersed in a rigid thermoplastic phase, wherein at least a portion of the rigid thermoplastic phase is grafted to the elastomeric phase, which comprises the steps of:
(a) polymerizing a mixture comprising at least one (C₁-C₁₂)alkyl(meth)acrylate monomer and at least one crosslinking agent comprising a polyethylenically unsaturated monomer to form a rubber substrate, followed by
(b) polymerizing a mixture of monomers in the presence of the rubber substrate, at least one of which monomers is selected from the group consisting of vinyl aromatic monomers and at least one of which monomers is selected from the group consisting of monoethylenically unsaturated nitrile monomers, and optionally followed by
(c) polymerizing one or more monomers in at least one subsequent stage in the presence of the rubber substrate from (b), wherein the one or more monomers comprise at least one monomer selected from the group consisting of (C₁-C₁₂)alkyl- and aryl-(meth)acrylate monomers;
wherein the amount of unreacted crosslinking agent remaining in the rubber substrate before step (b) is less than 5.6 micromoles per gram based on the dry weight of the rubber substrate.

In another embodiment the present invention relates to a molding composition comprising an acrylic-styrene-acrylonitrile (ASA) resin comprising a discontinuous elastomeric phase dispersed in a rigid thermoplastic phase, wherein at least a portion of the rigid thermoplastic phase is grafted to the elastomeric phase; and wherein the thermoplastic phase comprises structural units derived from at least one vinyl aromatic monomer, at least one monoethylenically unsaturated nitrile monomers, and optionally at least one (C₁-C₁₂)alkyl- and aryl-(meth)acrylate monomer; and wherein the elastomeric phase is derived from a rubber substrate comprising structural units derived from at least one (C₁-C₁₂)alkyl(meth)acrylate monomer and at least one crosslinking agent comprising a polyethylenically unsaturated monomer; and wherein the rubber substrate comprises less than 5.6 micromoles of unreacted crosslinking agent per gram of rubber substrate based on the dry weight of the rubber substrate before grafting. The present invention also relates to articles comprising said ASA resin and/or made from said molding composition. Various other features, aspects, and advantages of the present invention will become more apparent with reference to the following description and appended claims.

### DETAILED DESCRIPTION OF THE INVENTION

In the following specification and the claims which follow, reference will be made to a number of terms which shall be defined to have the following meanings. The singular forms "a", "an" and "the" include plural referents unless the context clearly dictates otherwise.

In various embodiments compositions of the present invention comprise an acrylic-styrene-acrylonitrile (ASA) resin comprising a discontinuous elastomeric phase and a rigid thermoplastic phase wherein at least a portion of the rigid thermoplastic phase is grafted to the elastomeric phase. The ASA resin is synthesized by a method which employs at least one rubber substrate for grafting with monomers to form the rigid thermoplastic phase. The rubber substrate comprises the discontinuous elastomeric phase of the ASA resin. There is no particular limitation on the rubber substrate provided it comprises structural units derived from an acrylic monomer and is susceptible to grafting by at least a portion of a graftable monomer. The rubber substrate has a glass transition temperature, Tg, in one embodiment below about 0°C, in another embodiment below about minus 20°C, and in still another embodiment below about minus 30°C.

In various embodiments the rubber substrate is derived from polymerization by known methods of at least one monoethylenically unsaturated alkyl (meth)acrylate monomer selected from (C₁-C₁₂)alkyl(meth)acrylate monomers and mixtures comprising at least one of said monomers. As used herein, the terminology "monoethylenically unsaturated" means having a single site of ethylenic unsaturation per molecule, and the terminology "(meth)acrylate monomers" refers collectively to acrylate monomers and methacrylate monomers. As used herein, the terminology "(Cₓ-C_{y})", as applied to a particular unit, such as, for example, a chemical compound or a chemical substituent group, means having a carbon atom content of from "x" carbon atoms to "y" carbon atoms per such unit. For example, "(C₁-C₁₂)alkyl" means a straight chain, branched or cyclic alkyl substituent group having from 1 to 12 carbon atoms per group and includes, but is not limited to, methyl, ethyl, n-propyl, iso-propyl, n-butyl, sec-butyl, t-butyl, pentyl, hexyl, heptyl, octyl, nonyl, decyl, undecyl and dodecyl. Suitable (C₁-C₁₂)alkyl(meth)acrylate monomers include, but are not limited to, (C₁-C₁₂)alkyl acrylate monomers, illustrative examples of which include ethyl acrylate, butyl acrylate, iso-pentyl acrylate, n-hexyl acrylate, and 2-ethyl hexyl acrylate; and their (C₁-C₁₂)alkyl methacrylate analogs illustrative examples of which include methyl methacrylate, ethyl methacrylate, propyl methacrylate, iso-propyl methacrylate, butyl methacrylate, hexyl methacrylate, and decyl methacrylate. In a particular embodiment of the present invention the rubber substrate comprises structural units derived from n-butyl acrylate.

In various embodiments the rubber substrate also comprises structural units derived from at least one polyethylenically unsaturated monomer, sometimes referred to hereinafter as "crosslinking agent". As used herein, the terminology "polyethylenically unsaturated" means having two or more sites of ethylenic unsaturation per molecule. A polyethylenically unsaturated monomer is typically employed to provide crosslinking of the rubber particles and to provide "graftlinking" sites in the rubber substrate for subsequent reaction with grafting monomers. Suitable polyethylenic unsaturated monomers include, but are not limited to, butylene glycol diacrylate, divinyl benzene, butylene glycol dimethacrylate, trimethylolpropane tri(meth)acrylate, allyl methacrylate, diallyl methacrylate, diallyl maleate, diallyl fumarate, diallyl phthalate, triallyl methacrylate, triallyl cyanurate, triallyl isocyanurate, the acrylate of tricyclodecenylalcohol and mixtures comprising at least one of such monomers. In a particular embodiment the rubber substrate comprises structural units derived from triallyl cyanurate.

The present inventors have discovered that the presence of residual crosslinking agent in the rubber substrate before grafting with monomers to form the rigid thermoplastic phase results in unacceptable aesthetic appearance in molded parts comprising ASA resin. In particular the presence of excessive amounts of residual crosslinking agent in the rubber substrate, after it is prepared, often results in increased haze, lowered gloss and less intense color development upon addition of pigments or dyes in molded parts comprising ASA resin. In the present context residual crosslinking agent is unreacted and not bound to the rubber substrate as measured immediately after the rubber substrate's preparation and before any grafting process to create rigid thermoplastic phase. Thus, to alleviate unacceptable aesthetic effects in molded parts, the amount of residual crosslinking agent in the rubber substrate measured immediately after its preparation is in one embodiment less than about 5.6 micromoles per gram, in another embodiment less than about 4.0 micromoles per gram, in another embodiment less than about 3.2 micromoles per gram, in another embodiment less than about 2.0 micromoles per gram, and in still another embodiment less than about 1.2 micromoles per gram, based on the dry weight of rubber substrate used in preparing the ASA resin. In still another embodiment there is present less than about 4 micromoles reactive ethylenic functionality from residual crosslinking agent per gram of rubber substrate as measured immediately after rubber substrate preparation and based on the dry weight of rubber substrate used in preparing the ASA resin.

In some embodiments the rubber substrate may optionally comprise structural units derived from minor amounts of other unsaturated monomers, for example those that are copolymerizable with an alkyl (meth)acrylate monomer used to prepare the rubber substrate. Suitable copolymerizable monomers include, but are not limited to, C₁-C₁₂ aryl or haloaryl substituted acrylate, C₁-C₁₂ aryl or haloaryl substituted methacrylate, or mixtures thereof; monoethylenically unsaturated carboxylic acids, such as, for example, acrylic acid, methacrylic acid and itaconic acid; glycidyl (meth)acrylate, hydroxy alkyl (meth)acrylate, hydroxy(C₁-C₁₂)alkyl (meth)acrylate, such as, for example, hydroxyethyl methacrylate; (C₄-C₁₂)cycloalkyl (meth)acrylate monomers, such as, for example, cyclohexyl methacrylate; (meth)acrylamide monomers, such as, for example, acrylamide, methacrylamide and N-substituted-acrylamide or - methacrylamides; maleimide monomers, such as, for example, maleimide, N-alkyl maleimides, N-aryl maleimides and haloaryl substituted maleimides; maleic anhydride; vinyl methyl ether, vinyl esters, such as, for example, vinyl acetate and vinyl propionate. As used herein, the term "(meth)acrylamide" refers collectively to acrylamides and methacrylamides. Suitable copolymerizable monomers also include, but are not limited to, vinyl aromatic monomers, such as, for example, styrene and substituted styrenes having one or more alkyl, alkoxy, hydroxy or halo substituent groups attached to the aromatic ring, including, but not limited to, alpha-methyl styrene, p-methyl styrene, 3,5-diethylstyrene, 4-n-propylstyrene, vinyl toluene, alpha-methyl vinyltoluene, vinyl xylene, trimethyl styrene, butyl styrene, t-butyl styrene, chlorostyrene, alpha-chlorostyrene, dichlorostyrene, tetrachlorostyrene, bromostyrene, alpha-bromostyrene, dibromostyrene, p-hydroxystyrene, p-acetoxystyrene, methoxystyrene and vinyl-substituted condensed aromatic ring structures, such as, for example, vinyl naphthalene, vinyl anthracene, as well as mixtures of vinyl aromatic monomers and monoethylenically unsaturated nitrile monomers such as, for example, acrylonitrile, ethacrylonitrile, methacrylonitrile, alpha-bromoacrylonitrile and alpha-chloro acrylonitrile. Substituted styrenes with mixtures of substituents on the aromatic ring are also suitable

The rubber substrate may be present in the ASA resin in one embodiment at a level of from about 10 to about 94 percent by weight; in another embodiment at a level of from about 10 to about 80 percent by weight; in another embodiment at a level of from about 15 to about 80 percent by weight; in another embodiment at a level of from about 35 to about 80 percent by weight; in another embodiment at a level of from about 40 to about 80 percent by weight; in another embodiment at a level of from about 25 to about 60 percent by weight, and in still another embodiment at a level of from about 40 to about 50 percent by weight based on the total weight of the ASA resin. In other embodiments the rubber substrate may be present in the ASA resin at a level of from about 5 to about 50 percent by weight; at a level of from about 8 to about 40 percent by weight; or at a level of from about 10 to about 30 percent by weight based on the total weight of the ASA resin.

There is no particular limitation on the particle size distribution of the rubber substrate (as measured before any grafting process to create rigid thermoplastic phase and sometimes referred to hereinafter as initial rubber substrate to distinguish it from the rubber substrate following grafting). In some embodiments the rubber substrate may possess a broad particle size distribution with particles ranging in size from about 50 nanometers (nm) to about 1000nm. In other embodiments the mean particle size by volume of the rubber substrate may be relatively narrow and have a mean value of less than about 150nm. In still other embodiments the mean particle size by volume of the rubber substrate may be in a range of between about 80nm and about 500nm. In still other embodiments the mean particle size by volume of the rubber substrate may be relatively narrow and have a mean value in a range of between about 200nm and about 750nm. In other embodiments the mean particle size by volume of the rubber substrate may be greater than about 400nm.

The ASA resin may be prepared by methods wherein monomers are polymerized in the presence of the rubber substrate to thereby form a graft copolymer, at least a portion of which is chemically grafted to the rubber phase. Any portion of graft copolymer not chemically grafted to rubber substrate comprises the rigid thermoplastic phase. The rigid thermoplastic phase comprises a thermoplastic polymer or copolymer that exhibits a glass transition temperature (Tg) in one embodiment of greater than about 25°C, in another embodiment of greater than or equal to 90°C, and in still another embodiment of greater than or equal to 100°C.

In a particular embodiment the rigid thermoplastic phase comprises a polymer having structural units derived from one or more monomers selected from the group consisting of (C₁-C₁₂)alkyl- and aryl-(meth)acrylate monomers, vinyl aromatic monomers and monoethylenically unsaturated nitrile monomers. Suitable (C₁-C₁₂)alkyl- and aryl-(meth)acrylate monomers, vinyl aromatic monomers and monoethylenically unsaturated nitrile monomers include those set forth hereinabove in the description of the rubber substrate. Examples of such polymers include, but are not limited to, a styrene/acrylonitrile copolymer, an alpha-methylstyrene/acrylonitrile copolymer, a styrene/methylmethacrylate copolymer, a styrene/maleic anhydride copolymer or an alpha-methylstyrene/styrene/acrylonitrile-, a styrene/acrylonitrile/methylmethacrylate-, a styrene/acrylonitrile/maleic anhydride- or a styrene/acrylonitrile/acrylic acid- terpolymer, or an alpha-methylstyrene/styrene/acrylonitrile terpolymer. These copolymers may be used for the rigid thermoplastic phase either individually or as mixtures.

In some embodiments the rigid thermoplastic phase comprises one or more vinyl aromatic polymers. Suitable vinyl aromatic polymers comprise at least about 20 wt.% structural units derived from one or more vinyl aromatic monomers. In a particular embodiment the rigid thermoplastic phase comprises a vinyl aromatic polymer having first structural units derived from one or more vinyl aromatic monomers and having second structural units derived from one or more monoethylenically unsaturated nitrile monomers. Examples of such vinyl aromatic polymers include, but are not limited to, a styrene/acrylonitrile copolymer, an alpha-methylstyrene/acrylonitrile copolymer, or an alpha-methylstyrene/styrene/acrylonitrile terpolymer. In another particular embodiment the rigid thermoplastic phase comprises a vinyl aromatic polymer having first structural units derived from one or more vinyl aromatic monomers; second structural units derived from one or more monoethylenically unsaturated nitrile monomers; and third structural units derived from one or more monomers selected from the group consisting of (C₁-C₁₂)alkyl- and aryl-(meth)acrylate monomers. Examples of such vinyl aromatic polymers include, but are not limited to, styrene/acrylonitrile/methyl methacrylate copolymer, styrene/alpha-methylstyrene/acrylonitrile/methyl methacrylate and alpha-methylstyrene/acrylonitrile/methyl methacrylate copolymer. These copolymers may be used for the rigid thermoplastic phase either individually or as mixtures.

When structural units in copolymers are derived from one or more monoethylenically unsaturated nitrile monomers, then the nitrile monomer content in the copolymer comprising the graft copolymer and the rigid thermoplastic phase may be in one embodiment in a range of between about 5 and about 40 percent by weight, in another embodiment in a range of between about 5 and about 30 percent by weight, in another embodiment in a range of between about 10 and about 30 percent by weight, and in yet another embodiment in a range of between about 15 and about 30 percent by weight, based on the weight of the copolymer comprising the graft copolymer and the rigid thermoplastic phase.

The amount of grafting that takes place between the rubber substrate and monomers comprising the rigid thermoplastic phase varies with the relative amount and composition of the rubber phase. In one embodiment, greater than about 10 wt % of the rigid thermoplastic phase is chemically grafted to the rubber, based on the total amount of rigid thermoplastic phase in the ASA resin. In another embodiment, greater than about 15 wt % of the rigid thermoplastic phase is chemically grafted to the rubber, based on the total amount of rigid thermoplastic phase in the ASA resin. In still another embodiment, greater than about 20 wt % of the rigid thermoplastic phase is chemically grafted to the rubber, based on the total amount of rigid thermoplastic phase in the ASA resin. In particular embodiments the amount of rigid thermoplastic phase chemically grafted to the rubber may be in a range of between about 5% and about 90 wt %; between about 10% and about 90 wt %; between about 15% and about 85 wt %; between about 15% and about 50 wt %; or between about 20% and about 50 wt %, based on the total amount of rigid thermoplastic phase in the ASA resin. In yet other embodiments, about 40 to 90 wt % of the rigid thermoplastic phase is free, that is, non-grafted.

The rigid thermoplastic phase may be present in the ASA resin in one embodiment at a level of from about 85 to about 6 percent by weight; in another embodiment at a level of from about 65 to about 6 percent by weight; in another embodiment at a level of from about 60 to about 20 percent by weight; in another embodiment at a level of from about 75 to about 25 percent by weight, in another embodiment at a level of from about 50 to about 30 percent by weight, and in still another embodiment at a level of from about 45 to about 35 percent by weight based on the total weight of the ASA resin. In other embodiments rigid thermoplastic phase may be present in the ASA resin in a range of between about 90% and about 30 wt %, based on the total weight of the ASA resin.

The rigid thermoplastic phase may be formed solely by polymerization carried out in the presence of rubber substrate or by addition of one or more separately polymerized rigid thermoplastic polymers to a rigid thermoplastic polymer that has been polymerized in the presence of the rubber substrate. When at least a portion of separately synthesized rigid thermoplastic phase is added, then the amount of said separately synthesized rigid thermoplastic phase added is in an amount in a range of between about 30 wt. % and about 80 wt. % based on the weight of the entire ASA resin. Two or more different rubber substrates each possessing a different mean particle size may be separately employed in such a polymerization reaction and then the products blended together. In illustrative embodiments wherein such products each possessing a different mean particle size of initial rubber substrate are blended together, then the ratios of said substrates may be in a range of about 90:10 to about 10:90, or in a range of about 80:20 to about 20:80, or in a range of about 70:30 to about 30:70. In some embodiments an initial rubber substrate with smaller particle size is the major component in such a blend containing more than one particle size of initial rubber substrate.

The rigid thermoplastic phase may be made according to known processes, for example, mass polymerization, emulsion polymerization, suspension polymerization or combinations thereof, wherein at least a portion of the rigid thermoplastic phase is chemically bonded, i.e., "grafted" to the rubber phase via reaction with unsaturated sites present in the rubber phase. The grafting reaction may be performed in a batch, continuous or semi-continuous process. Representative procedures include, but are not limited to, those taught in U.S. Patent Nos. 3,944,631; and U.S. patent application Serial No. 08/962,458, filed October 31, 1997. The unsaturated sites in the rubber phase are provided, for example, by residual unsaturated sites in those structural units of the rubber that were derived from a polyethylenically unsaturated monomer.

In some embodiments the ASA resin may be prepared by a method wherein monomer grafting to rubber substrate with concomitant formation of rigid thermoplastic phase is optionally performed in stages wherein at least one first monomer is grafted to rubber substrate followed by at least one second monomer different from said first monomer, as described, for example in U.S. patent application Serial No. 10/748,394, filed May 5, 2004. In the present context the change from one graft stage to the next is defined as that point where there is a change in the identity of at least one monomer added to the rubber substrate for grafting. In one embodiment formation of rigid thermoplastic phase and grafting to rubber substrate are performed by feeding at least one first monomer over time to a reaction mixture comprising rubber substrate. In this context a second graft stage occurs when a different monomer is introduced into the feed stream in the presence or absence of said first monomer.

When staged grafting is employed, at least two stages are employed for grafting, although additional stages may be employed. The first graft stage is performed with one or more monomers selected from the group consisting of vinyl aromatic monomers and monoethylenically unsaturated nitrile monomers. In a particular embodiment grafting is performed in a first stage with a mixture of monomers, at least one of which is selected from the group consisting of vinyl aromatic monomers and at least one of which is selected from the group consisting of monoethylenically unsaturated nitrile monomers. When at least one vinyl aromatic monomer and at least one monoethylenically unsaturated nitrile monomer are employed in the first graft stage, then the wt./wt. ratio of vinyl aromatic monomer to monoethylenically unsaturated nitrile monomer is in one embodiment in a range of between about 1:1 and about 6:1, in another embodiment in a range of between about 1.5:1 and about 4:1, in still another embodiment in a range of between about 2:1 and about 3:1, and in still another embodiment in a range of between about 2.5:1 and about 3:1. In one preferred embodiment the wt./wt. ratio of vinyl aromatic monomer to monoethylenically unsaturated nitrile monomer employed in the first graft stage is about 2.6:1.

When staged grafting is employed, then in at least one subsequent stage following said first stage, grafting is performed with one or more monomers selected from the group consisting of (C₁-C₁₂)alkyl- and aryl-(meth)acrylate monomers, vinyl aromatic monomers and monoethylenically unsaturated nitrile monomers. In a particular embodiment grafting is performed in at least one subsequent stage with one or more monomers, at least one of which is selected from the group consisting of (C₁-C₁₂)alkyl- and aryl-(meth)acrylate monomers. In another particular embodiment grafting is performed in at least one subsequent stage with a mixture of monomers, at least one of which is selected from the group consisting of (C₁-C₁₂)alkyl- and aryl-(meth)acrylate monomers and at least one of which is selected from the group consisting of vinyl aromatic monomers and monoethylenically unsaturated nitrile monomers. In another particular embodiment grafting is performed in at least one subsequent stage with a mixture of monomers, one of which is selected from the group consisting of (C₁-C₁₂)alkyl- and aryl-(meth)acrylate monomers; one of which is selected from the group consisting of vinyl aromatic monomers and one of which is selected from the group consisting of monoethylenically unsaturated nitrile monomers. Said(C₁-C₁₂)alkyl- and aryl-(meth)acrylate monomers, vinyl aromatic monomers and monoethylenically unsaturated nitrile monomers include those described hereinabove.

When staged grafting is employed, then in the first graft stage the amount of monomer employed for grafting to rubber substrate is in one embodiment in a range of between about 5 wt.% and about 98 wt.%; in another embodiment in a range of between about 5 wt.% and about 95 wt.%; in another embodiment in a range of between about 10 wt.% and about 90 wt.%; in another embodiment in a range of between about 15 wt.% and about 85 wt.%; in another embodiment in a range of between about 20 wt.% and about 80 wt.%; and in yet another embodiment in a range of between about 30 wt.% and about 70 wt.%, based on the total weight of monomer employed for grafting in all stages. In one particular embodiment the amount of monomer employed for grafting to rubber substrate in the first stage is in a range of between about 30 wt.% and about 95 wt.% based on the total weight of monomer employed for grafting in all stages. Further monomer is then grafted to rubber substrate in one or more stages following said first stage. In one particular embodiment all further monomer is grafted to rubber substrate in one second stage following said first stage.

When at least one (C₁-C₁₂)alkyl- and aryl-(meth)acrylate monomer is employed for grafting to rubber substrate in a stage following the first stage, then the amount of said (meth)acrylate monomer is in one embodiment in a range of between about 95 wt.% and about 2 wt.%; in another embodiment in a range of between about 80 wt.% and about 2 wt.%; in another embodiment in a range of between about 70 wt.% and about 2 wt.%; in another embodiment in a range of between about 50 wt.% and about 2 wt.%; in another embodiment in a range of between about 45 wt.% and about 2 wt.%; and in yet another embodiment in a range of between about 40 wt.% and about 5 wt.%, based on the total weight of monomer employed for grafting in all stages.

When a mixture of monomers comprising at least one (C₁-C₁₂)alkyl- and aryl-(meth)acrylate monomer is employed for grafting to rubber substrate in a stage following the first stage, then the wt./wt. ratio of said (meth)acrylate monomer to the totality of other monomers is in one embodiment in a range of between about 10:1 1 and about 1:10; in another embodiment in a range of between about 8:1 and about 1:8; in another embodiment in a range of between about 5:1 and about 1:5; in another embodiment in a range of between about 3:1 and about 1:3; in another embodiment in a range of between about 2:1 and about 1:2; and in yet another embodiment in a range of between about 1.5:1 and about 1:1.5.

In particular embodiments the ASA resin comprises a rigid thermoplastic phase comprising either a styrene/acrylonitrile copolymer or a styrene/acrylonitrile/methyl methacrylate copolymer. An ASA resin comprising a styrene/acrylonitrile/methyl methacrylate copolymer as rigid thermoplastic phase is sometimes referred to as a methyl methacrylate-modified ASA (sometimes abbreviated MMA-ASA). In another particular embodiment the rubber modified thermoplastic resin consists essentially of an ASA resin which is not modified with MMA. In another particular embodiment the rubber modified thermoplastic resin consists essentially of an MMA-ASA resin.

Compositions of the present invention further optionally comprise at least one other resin, illustrative examples of which include, but are not limited to, polycarbonates, polyesters, styrenic polymers and copolymers, poly(alpha-methyl styrene), SAN, ABS, poly(meth)acrylate polymers and copolymers; poly(methyl methacrylate); copolymers derived from at least one vinyl aromatic monomer, at least one monoethylenically unsaturated nitrile monomer, and at least one (meth)acrylate monomer; MMASAN copolymer; copolymers derived from at least one vinyl aromatic monomer, at least one monoethylenically unsaturated nitrile monomer, and at least one maleimide monomer; styrene/acrylonitrile/N-phenylmaleimide copolymer; copolymers derived from at least one vinyl aromatic monomer, at least one monoethylenically unsaturated nitrile monomer, and at least one maleic anhydride monomer; or styrene/acrylonitrile/maleic anhydride copolymer.

Compositions of the present invention may optionally comprise additives known in the art including, but not limited to, stabilizers, such as color stabilizers, heat stabilizers, light stabilizers, antioxidants, UV screeners, and UV absorbers; flame retardants, anti-drip agents, lubricants, flow promoters and other processing aids; plasticizers, antistatic agents, mold release agents, impact modifiers, fillers, and colorants such as dyes and pigments which may be organic, inorganic or organometallic; and like additives. Illustrative additives include, but are not limited to, silica, silicates, zeolites, titanium dioxide, stone powder, glass fibers or spheres, carbon fibers, carbon black, graphite, calcium carbonate, talc, mica, lithopone, zinc oxide, zirconium silicate, iron oxides, diatomaceous earth, calcium carbonate, magnesium oxide, chromic oxide, zirconium oxide, aluminum oxide, crushed quartz, clay, calcined clay, talc, kaolin, asbestos, cellulose, wood flour, cork, cotton and synthetic textile fibers, especially reinforcing fillers such as glass fibers, carbon fibers, and metal fibers. Often more than one additive is included in compositions of the invention, and in some embodiments more than one additive of one type is included. In a particular embodiment a composition further comprises an additive selected from the group consisting of colorants, dyes, pigments, lubricants, stabilizers, fillers and mixtures thereof.

The compositions of the present invention can be formed into useful articles. In some embodiments the articles are unitary articles comprising a composition of the present invention. In other embodiments the articles are multilayer articles comprising a layer comprising a composition of the invention. Illustrative examples of such multilayer and unitary articles include, but are not limited to, articles for outdoor vehicle and device (OVAD) applications; exterior and interior components for aircraft, automotive, truck, military vehicle (including automotive, aircraft, and water-borne vehicles), scooter, and motorcycle, including panels, quarter panels, rocker panels, vertical panels, horizontal panels, trim, pillars, center posts, fenders, doors, decklids, trunklids, hoods, bonnets, roofs, bumpers, fascia, grilles, mirror housings, pillar appliques, cladding, body side moldings, wheel covers, hubcaps, door handles, spoilers, window frames, headlamp bezels, tail lamp housings, tail lamp bezels, license plate enclosures, roof racks, and running boards; enclosures, housings, panels, and parts for outdoor vehicles and devices; enclosures for electrical and telecommunication devices; outdoor furniture; aircraft components; boats and marine equipment, including trim, enclosures, and housings; outboard motor housings; depth finder housings, personal water-craft; jet-skis; pools; spas; hot-tubs; steps; step coverings; building and construction applications such as glazing, fencing, decking planks, roofs; siding, particularly vinyl siding applications; windows, floors, decorative window furnishings or treatments; wall panels, and doors; outdoor and indoor signs; enclosures, housings, panels, and parts for automatic teller machines (ATM); enclosures, housings, panels, and parts for lawn and garden tractors, lawn mowers, and tools, including lawn and garden tools; window and door trim; sports equipment and toys; enclosures, housings, panels, and parts for snowmobiles; recreational vehicle panels and components; playground equipment; articles made from plastic-wood combinations; golf course markers; utility pit covers; mobile phone housings; radio sender housings; radio receiver housings; light fixtures; lighting appliances; reflectors; network interface device housings; transformer housings; air conditioner housings; cladding or seating for public transportation; cladding or seating for trains, subways, or buses; meter housings; antenna housings; cladding for satellite dishes; and like applications.

Said articles may be prepared by a variety of known processes such as, for example, one or more steps of profile extrusion, sheet extrusion, coextrusion, extrusion blow molding and thermoforming, or injection molding. The invention further contemplates additional fabrication operations on said articles, such as, but not limited to, molding, in-mold decoration, baking in a paint oven, plating, or lamination. A particular and surprising advantage of the present invention is that it provides an efficient method for retaining good surface aesthetics in molded parts comprising ASA while molding at low mold temperature. Another advantage of the present invention is a method for improving productivity of molded parts comprising ASA through the use of lower mold temperatures. Typically, as the mold temperature is lowered, molded test parts comprising ASA comprising a rubber substrate wherein the amount residual crosslinking agent in the rubber substrate immediately after its preparation is less than 5.6 micromoles per gram in examples of the invention show either a higher gloss value or a lower haze value, or both a higher gloss value and a lower haze value compared to molded test parts of comparative examples comprising ASA comprising a rubber substrate wherein the amount residual crosslinking agent in the rubber substrate immediately after its preparation is greater than 5.6 micromoles per gram. Illustrative, non-limiting mold temperature ranges at which these effects are seen are in one embodiment in a range of between about 55°C and about 75°C and in another embodiment in a range of between about 60°C and about 70°C.

Without further elaboration, it is believed that one skilled in the art can, using the description herein, utilize the present invention to its fullest extent. The following examples are included to provide additional guidance to those skilled in the art in practicing the claimed invention. The examples provided are merely representative of the work that contributes to the teaching of the present application. Accordingly, these examples are not intended to limit the invention, as defined in the appended claims, in any manner. In the following examples and comparative examples unreacted residual triallyl cyanurate (TAC) crosslinker in poly(butyl acrylate) was measured by dispersing aqueous poly(butyl acrylate) latex in dimethyl sulfoxide along with an internal standard at room temperature, and analyzing a sample by gas chromatography, which method had a detection threshold of about 0.08 micromoles per gram.

### EXAMPLE 1

Example 1 illustrates the preparation of a small-particle size MMA-ASA resin by an emulsion polymerization process.

Procedure 1A: Preparation of small-particle size poly(butyl acrylate) substrate latex: A stainless steel reactor equipped with a bladed turbine agitator was charged with 70 parts by weight (pbw) of demineralized water and 0.15 pbw of tetrasodium pyrophosphate. Agitation was begun and the reactor contents were heated to 60°C while purging the reactor contents with nitrogen for one hour. After purging was complete, 0.33 pbw of sodium lauryl sulfate were added and agitated for 5 minutes; the nitrogen feed was changed from purging to blanketing.

The following feed streams were prepared for charging to the reactor: butyl acrylate ("BA monomer") in two portions of 83 pbw and 9.22 pbw; two solutions of crosslinking agent comprising 0.70 pbw of triallyl cyanurate in 6.30 pbw butyl acrylate ("TAC solution #1") and 0.078 pbw of triallyl cyanurate in 0.70 pbw butyl acrylate ("TAC solution #2"); an activator solution containing 0.132 pbw sodium formaldehyde sulfoxylate, 0.025 pbw of the monosodium salt of ethylenediaminetetraacetic acid (NaHEDTA), 0.005 pbw ferrous sulfate heptahydrate and 15 pbw water ("activator solution"); 0.120 pbw cumene hydroperoxide (CHP); 40.7 pbw of demineralized water (DMW); and a surfactant solution containing 2.70 pbw of sodium lauryl sulfate (SLS) in 24.3 pbw of demineralized water ("soap solution").

To begin the reaction, 7.25% of the first BA monomer portion and TAC solution #1 were batch-charged to the reactor followed by 20% of the total activator solution while maintaining agitation. Then 6% of the total CHP charge was added to initiate polymerization, wherein an exothermic reaction was typically observed within one minute of the CHP addition.

Ten minutes after observation of the first exotherm was taken as time zero (T=0). The soap solution and remainder of the other feed streams were then fed according to the pump schedule in Table 1 from T=0 while maintaining the reaction at 60°C. The resulting monodisperse latex of poly(butyl acrylate) was analyzed by means of multi-angle light scattering using a Coulter LS230 particle size analyzer and determined to have a mean particle size by volume of 109nm. The amount of unreacted TAC monomer in the rubber latex at the end of the reaction was determined by GC analysis to be 1.52 micromoles per gram on the basis of aqueous latex, or 3.73 micromoles per gram of unreacted TAC in the PBA dry polymer solids.

**TABLE 1**

| Material | % of total to be pumped | Reaction Time |
|---|---|---|
| 1st BA portion | 92.5 % | 0-80 min |
| 1st BA/TAC Solution | 92.5 % | 0-80 min |
| DMW | 100 % | 0-80 min |
| Activator Solution | 80 % | 0-105 min |
| CHP | 92.5% | 0-105 min |
| 2nd BA portion | 100 % | 80-105 min |
| 2nd BA/TAC Solution | 100 % | 80-100 min |
| 1st Pumped DMW/SLS Solution | 100 % | 0-105 min |

Procedure 1B: Preparation of small-particle size MMA-ASA graft copolymer: The graft copolymer was made by the aqueous emulsion polymerization of styrene, acrylonitrile and MMA monomers in the presence of the poly(butyl acrylate) rubber latex particles made by procedure 1A. A stainless steel reactor with an agitator fitted with turbine blades was charged with 185 pbw water, and 45.0 pbw poly(butyl acrylate) rubber particles (in the form of an aqueous poly(butyl acrylate) rubber latex containing about 39 wt.% solids), and the contents of the reactor were heated to 60°C. The following feed charges were prepared: styrene in two portions of 21.96 and 9.8 pbw; acrylonitrile in two portions of 8.54 and 6.13 pbw; 8.58 pbw methyl methacrylate (MMA); 0.200 pbw cumene hydroperoxide; an activator solution containing 0.0026 pbw ferrous sulfate heptahydrate, 0.0128 pbw of the disodium salt of ethylenediaminetetraacetic acid (Na₂EDTA), 0.23 pbw sodium formaldehyde sulfoxylate (SFS) and 5 pbw water; and a soap solution containing 0.2 pbw SLS in 1.8 pbw demineralized water. These were each fed into the reactor at substantially uniform respective rates according to the schedule in Table 2:

**TABLE2**

| Feed Time | Feed stream | Temperature |
|---|---|---|
| 0 - 50 min | Styrene #1 | 60°C |
| 0 - 50 min | Acrylonitrile #1 | 60°C |
| 50 - 90 min | Styrene #2 | 60°C |
| 50 - 90 min | Acrylonitrile #2 | 60°C |
| 50 - 90 min | MMA | 60°C |
| 0 - 90 min | Soap solution | 60°C |
| 0 -125 min | CHP, Activator solution | Ramp to 71°C after 90 minutes |
| 125-140min | All feeds off | 71°C |
| Cool at 140 min | Cooling to 49°C | Drop batch at 49°C |

After the batch was cooled, 0.35 pbw of a 1:1 mixture of hindered phenol and thioester emulsified with fatty acid soap was added with stirring. The reactor contents were then coagulated by the addition of 3 pbw calcium chloride per 100 pbw graft copolymer particles (dry basis) at a temperature of from 85°C to 91°C and then dried in a fluid bed dryer at an outlet air temperature of 74°C.

### EXAMPLE 2

Example 2 illustrates the preparation of a large-particle size MMA-ASA resin by an emulsion polymerization process by following a seeded semi-batch polymerization process.

Procedure 2A: Preparation of poly(butyl acrylate) seed latex: The seed latex particles were produced by a continuous emulsion polymerization reaction according to the method described in EP 0913408B1 Example 1, using a monomer feed composition of 0.47 pbw of TAC and 99.53 pbw of butyl acrylate. The resulting latex polymer yielded a broad particle size distribution with a mean particle size by volume of 270 nm determined by means of the Spectronic 20 light scattering method disclosed in the reference.

Procedure 2B: Preparation of large-particle size poly(butyl acrylate) substrate latex: A stainless steel reactor equipped with a bladed turbine agitator was charged with 90 pbw of demineralized water and 0.15 pbw of tetrasodium pyrophosphate. Agitation was begun and the reactor contents were heated to 60°C while purging the reactor contents with nitrogen for one hour. After purging was complete, 1.25 pbw of the poly(butyl acrylate) seed latex from procedure 2A were added and agitated for 5 minutes; the nitrogen feed was changed from purging to blanketing.

The following feed streams were prepared for charging to the reactor: butyl acrylate ("BA monomer") in 2 portions of 85.75 and 9.4 pbw; two solutions of crosslinking agent comprising 0.30 pbw of triallyl cyanurate in 2.70 pbw butyl acrylate ("TAC solution #1") and 0.06 pbw of triallyl cyanurate in 0.54 pbw butyl acrylate ("TAC solution #2"); an activator solution containing 0.132 pbw sodium formaldehyde sulfoxylate, 0.025 pbw of the monosodium salt of ethylenediaminetetraacetic acid (NaHEDTA), 0.005 pbw ferrous sulfate heptahydrate and 15 pbw water ("activator solution"); 0.120 pbw cumene hydroperoxide (CHP); 58 pbw of demineralized water (DMW); and two surfactant solutions containing 0.30 pbw of sodium lauryl sulfate (SLS) in 2.7 pbw of demineralized water ("soap solution #1"), and 0.50 pbw of sodium lauryl sulfate (SLS) in 4.5 pbw of demineralized water (soap solution #2").

Once the reaction temperature was back to 60°C after charging the seed latex prepared in 2A, 20% of the activator solution was batch charged to the reactor. Then all of the remaining monomer, soap and activator feeds to the reactor were started and fed according to the feed schedule shown in Table 3. After all feeds had been charged, the reaction was held at 60°C with agitation for 30 minutes, then cooled to 49°C before dropping the batch from the reactor.

The resulting monodisperse latex of poly(butyl acrylate) was analyzed by means of multi-angle light scattering using a Coulter LS230 particle size analyzer and determined to have a mean particle size by volume of 507nm. The amount of unreacted TAC monomer in the latex was determined by GC analysis to be 1.24 micromoles per gram on the basis of aqueous latex, or 3.41 micromoles per gram of TAC in the PBA dry polymer solids.

**TABLE 3**

| Material | % of total to be pumped | Reaction Time |
|---|---|---|
| 1st BA | 100 % | 5-135 min |
| 1st BA/TAC Solution | 100 % | 5-135 min |
| Activator Solution | 80 % | 0-175 min |
| CHP | 100 % | 0-175 min |
| 2nd BA | 100 % | 135-175 min |
| 2nd BA/TAC Solution | 100 % | 135-165 min |
| 1st Pumped DMW/SLS Solution | 100 % | 20 - 175 min |
| 2nd Pumped DMW/SLS Solution | 100 % | 175-205 min |
| DMW | 100 % | 5-135 min |

Procedure 2C: Preparation of large-particle size MMA-ASA graft resin: The graft copolymer was made by the aqueous emulsion polymerization of styrene, acrylonitrile and MMA monomers in the presence of the poly(butyl acrylate) rubber latex particles made by procedure 2B while following the recipe and process described in Example 1 and isolating in the manner described in Example 1, except that 0.6 pbw of SLS in 5.4 pbw of demineralized water was used as the soap solution..

### COMPARATIVE EXAMPLE 1

A small-particle size MMA-ASA graft copolymer was prepared by first preparing a small particle size poly(butyl acrylate) substrate polymer by the emulsion polymerization conditions as described in procedure 1A using a second BA portion of 4.0 pbw and a TAC #2 solution of 0.6 pbw of TAC in 5.4 pbw of BA, and then subjecting 45 pbw of the substrate polymer to the graft emulsion polymerization conditions described in procedure 1B. The monodisperse latex of small particle size poly(butyl acrylate) substrate polymer was analyzed by means of multi-angle light scattering using a Coulter LS230 particle size analyzer and determined to have a mean particle size by volume of 111nm. The amount of unreacted TAC monomer in the rubber latex at the end of the reaction was determined by GC analysis to be 5.98 micromoles per gram on the basis of aqueous latex, or 14.8 micromoles per gram of unreacted TAC in the PBA dry polymer solids.

### COMPARATIVE EXAMPLE 2

A large-particle size MMA-ASA graft copolymer was prepared by first preparing a large-particle size poly(butyl acrylate) substrate polymer by the emulsion polymerization conditions as described in procedure 2B using a second BA portion of 4.0 pbw and a TAC #2 solution of 0.6 pbw of TAC in 5.4.pbw of BA, and then subjecting 45 pbw of the poly(butyl acrylate) substrate polymer to the graft emulsion polymerization conditions as described in procedure 2C. The monodisperse latex of large-particle size poly(butyl acrylate) substrate polymer was analyzed by means of multi-angle light scattering using a Coulter LS230 particle size analyzer and determined to have a mean particle size by volume of 520nm. The amount of unreacted TAC monomer in the rubber latex at the end of the reaction was determined by GC analysis to be 6.83 micromoles per gram on the basis of aqueous latex, or 18.5 micromoles per gram of unreacted TAC in the PBA dry polymer solids.

In the following examples and comparative examples the components of the formulations were as follows: (i) AMSAN, a copolymer comprising structural units derived from 70 weight % alpha-methyl styrene and 30 weight % acrylonitrile, and having a melt volume rate value of about 10 cubic centimeters per 10 minutes measured at 230°C using a 3.8 kilogram weight according to ISO 1133; (ii) MMASAN, a copolymer comprising structural units derived from 40 weight % styrene, 25 weight % acrylonitrile, and 35 weight % methyl methacrylate and having a melt volume rate value of about 40 cubic centimeters per 10 minutes measured at 220°C using a 10 kilogram weight according to ISO 1133; and (iii) MMA-ASA, a mixture of copolymers, one derived from a rubber substrate with mean particle size by volume of about 100nm and another derived from a rubber substrate with mean particle size by volume of about 500nm, and each comprising structural units derived from about 32 weight % styrene, about 15 weight % acrylonitrile, about 9 weight % methyl methacrylate, and 45 weight % butyl acrylate. Values for haze and gloss were measured in a BYK Gardner haze-gloss meter at a 20 degree angle according to ASTM D2457-03. Molded test specimens were subjected to color measurements in the CIE L*a*b* space using a MacBeth 7000 instrument for color measurement.

Values for L* were measured with specular component excluded using measurement mode "DREOL" on the MacBeth instrument.

### EXAMPLES 3-4 AND COMPARATIVE EXAMPLES 3-4

Compositions were formulated using the components in parts by weight shown in Table 4. In addition each composition further comprised 2 parts per hundred parts resin (phr) carbon black. Also each composition further comprised 1.5 phr stabilizers, and 1 phr lubricants, which are not believed to affect molded part aesthetics. Example 3 and comparative example 3 comprised 33 parts MMA-ASA derived from rubber substrate with mean particle size by volume of about 100nm and 12 parts MMA-ASA derived from rubber substrate with mean particle size by volume of about 500nm (45 parts total). Example 4 and comparative example 4 comprised 28.5 parts MMA-ASA derived from rubber substrate with mean particle size by volume of about 100nm and 10 parts MMA-ASA derived from rubber substrate with mean particle size by volume of about 500nm (38.5 parts total). MMA-ASA with high residual level of TAC comprised a 75/25 blend of the products of comparative examples 1 and 2, respectively, and had greater than 5.6 micromoles per gram TAC based on dry weight of poly(butyl acrylate) measured immediately after the rubber substrate's preparation. MMA-ASA with low residual level of TAC comprised a 75/25 blend of the products of examples 1 and 2, respectively, had less than 5.6 micromoles per gram TAC based on dry weight of poly(butyl acrylate) measured immediately after the rubber substrate's preparation. The abbreviations "C.Ex." and "Ex." mean comparative example and example, respectively.

**TABLE 4**

| Component | C.Ex. 3 | Ex. 3 | C.Ex.4 | Ex. 4 |
|---|---|---|---|---|
| AMSAN | 40 | 40 | -- | -- |
| MMASAN | 15 | 15 | 61.5 | 61.5 |
| MMA-ASA; high residual TAC | 45 | -- | 38.5 | -- |
| MMA-ASA; low residual TAC | -- | 45 | -- | 38.5 |
| | | | | |
| Haze | | | | |
| 60°C mold temp. | 111 | 52 | 52 | 36 |
| 71°C mold temp. | 40 | 26 | 18 | 14 |
| 82°C mold temp. | 17 | 15 | 12 | 12 |
| Gloss | | | | |
| 60°C mold temp. | 73 | 84 | 80 | 83 |
| 71°C mold temp. | 84 | 89 | 86 | 88 |
| 82°C mold temp. | 89 | 92 | 88 | 89 |
| L* value | | | | |
| 60°C mold temp. | 8.65 | 6.77 | 7.27 | 6.47 |
| 71°C mold temp. | 6.35 | 5.58 | 5.92 | 5.37 |
| 82°C mold temp. | 5.36 | 5.12 | 5.57 | 5.39 |

The properties of molded test parts show that compositions of the examples of the invention provide higher gloss values and lower haze values than compositions of the comparative examples, and particularly as the molding temperature is lowered for both compositions. Typically desired properties for molded parts include minimum haze with values of about 26 or less being particularly desired. The data also show that the examples of the invention provide lower L* values, and, hence, better color properties than the comparative examples, and particularly as the molding temperature is lowered for both compositions. Typically desired properties for molded parts include a minimum L* value, with values of about 6 or less being particularly desired in certain embodiments such as those involving carbon black pigmented parts.

### EXAMPLE 5 AND COMPARATIVE EXAMPLE 5

A composition is prepared similar to that of example 3 except that the ASA resin is not modified with MMA and comprises a rubber substrate wherein the amount residual crosslinking agent in the rubber substrate immediately after its preparation is less than 5.6 micromoles per gram. A comparative composition is also prepared similar to those of comparative example 3 except that the ASA resin is not modified with MMA and comprises a rubber substrate wherein the amount residual crosslinking agent in the rubber substrate immediately after its preparation is greater than 5.6 micromoles per gram. Molded test parts show that the composition of the example of the invention provides either a higher gloss value or a lower haze value, or both a higher gloss value and a lower haze value compared to the composition of the comparative example, and in a particular embodiment said effects are seen as the molding temperature is lowered for both compositions.

### EXAMPLE 6 AND COMPARATIVE EXAMPLE 6

A composition is prepared similar to that of example 4 except that the ASA resin is not modified with MMA and comprises a rubber substrate wherein the amount residual crosslinking agent in the rubber substrate immediately after its preparation is less than 5.6 micromoles per gram. A comparative composition is also prepared similar to those of comparative example 4 except that the ASA resin is not modified with MMA and comprises a rubber substrate wherein the amount residual crosslinking agent in the rubber substrate immediately after its preparation is greater than 5.6 micromoles per gram. Molded test parts show that the composition of the example of the invention provides either a higher gloss value or a lower haze value, or both a higher gloss value and a lower haze value compared to the composition of the comparative example, and in a particular embodiment said effects are seen as the molding temperature is lowered for both compositions.

While the invention has been illustrated and described in typical embodiments, it is not intended to be limited to the details shown, since various modifications and substitutions can be made without departing in any way from the spirit of the present invention. As such, further modifications and equivalents of the invention herein disclosed may occur to persons skilled in the art using no more than routine experimentation, and all such modifications and equivalents are believed to be within the spirit and scope of the invention as defined by the following claims. All Patents and Patent Applications cited herein are incorporated herein by reference.

## Claims

1. A method for preparing an acrylic-styrene-acrylonitrile (ASA) resin comprising a discontinuous elastomeric phase dispersed in a rigid thermoplastic phase, wherein at least a portion of the rigid thermoplastic phase is grafted to the elastomeric phase, which comprises the steps of:
(a) polymerizing a mixture comprising at least one (C₁-C₁₂)alkyl(meth)acrylate monomer and at least one crosslinking agent comprising a polyethylenically unsaturated monomer to form a rubber substrate, followed by
(b) polymerizing a mixture of monomers in the presence of the rubber substrate, at least one of which monomers is selected from the group consisting of vinyl aromatic monomers and at least one of which monomers is selected from the group consisting of monoethylenically unsaturated nitrile monomers, and optionally followed by
(c) polymerizing one or more monomers in at least one subsequent stage in the presence of the rubber substrate from (b), wherein the one or more monomers comprise at least one monomer selected from the group consisting of (C₁-C₁₂)alkyl- and aryl-(meth)acrylate monomers;
wherein the amount of unreacted crosslinking agent remaining in the rubber substrate before step (b) is less than 5.6 micromoles per gram based on the dry weight of the rubber substrate.

2. The method of claim 1, wherein the rubber substrate comprises a polymer having structural units derived from butyl acrylate.

3. The method of claim 1, wherein the polyethylenically unsaturated monomer is selected from the group consisting of butylene glycol diacrylate, divinyl benzene, butylene glycol dimethacrylate, trimethylolpropane tri(meth)acrylate, allyl methacrylate, diallyl methacrylate, diallyl maleate, diallyl fumarate, diallyl phthalate, triallyl methacrylate, triallyl isocyanurate, triallyl cyanurate, the acrylate of tricyclodecenylalcohol and mixtures thereof.

4. The method of claim 1, wherein the elastomeric phase initially comprises a rubber substrate with particles selected from the group consisting of a mixture of particles sizes with at least two mean particle size distributions and a broad size distribution having particles ranging in size from about 50nm to about 1000nm.

5. The method of claim 4, wherein the elastomeric phase initially comprises a rubber substrate with two mean particle size distributions by volume each in a range of between about 80nm and about 500nm.

6. The method of claim 1, wherein the rigid thermoplastic phase comprises about 50 to about 30 percent by weight, based on the total weight of the ASA resin.

7. The method of claim 1, wherein the mixture of monomers in step (b) comprises styrene and acrylonitrile, or alpha-methyl styrene and acrylonitrile or a mixture of styrene, alpha-methyl styrene and acrylonitrile.

8. The method of claim 7, wherein the wt./wt. ratio of styrene, alpha-methyl styrene or mixture thereof to acrylonitrile is in a range of between about 1.5:1 and about 4:1.

9. A method for preparing a methyl methacrylate-modified acrylic/styrene/acrylonitrile resin comprising about 35 to about 80 wt.% based on the total weight of the resin of a discontinuous elastomeric phase dispersed in a rigid thermoplastic phase, wherein at least a portion of the rigid thermoplastic phase is grafted to the elastomeric phase, which comprises the steps of:
(a) polymerizing a mixture comprising butyl acrylate and at least one crosslinking agent comprising a polyethylenically unsaturated monomer to form the rubber substrate, followed by
(b) polymerizing in the presence of the rubber substrate, a monomer mixture of styrene and acrylonitrile in a wt./wt. ratio in a range of between about 2:1 and about 3:1;
wherein the amount of unreacted crosslinking agent remaining in the rubber substrate before step (b) is less than 5.6 micromoles per gram based on the dry weight of the rubber substrate.

10. A molding composition comprising an acrylic-styrene-acrylonitrile (ASA) resin comprising a discontinuous elastomeric phase dispersed in a rigid thermoplastic phase, wherein at least a portion of the rigid thermoplastic phase is grafted to the elastomeric phase; wherein the thermoplastic phase comprises structural units derived from at least one vinyl aromatic monomer, at least one monoethylenically unsaturated nitrile monomers, and optionally at least one (C₁-C₁₂)alkyl- and aryl-(meth)acrylate monomer; wherein the elastomeric phase is derived from a rubber substrate comprising structural units derived from at least one (C₁-C₁₂)alkyl(meth)acrylate monomer and at least one crosslinking agent comprising a polyethylenically unsaturated monomer; and wherein the rubber substrate comprises less than 5.6 micromoles of unreacted crosslinking agent per gram of rubber substrate based on the dry weight of the rubber substrate before grafting.

## Patentansprüche

1. Verfahren zur Herstellung eines Acrylat-Styrol-Acrylnitril-Harzes (ASA-Harzes) mit einer diskontinuierlichen elastomeren Phase, die in einer thermoplastischen Hartphase dispergiert ist, wobei mindestens ein Teil der thermoplastischen Hartphase auf die elastomere Phase aufgepfropft ist, bei dem man:
(a) eine Mischung, die mindestens ein (C₁-C₁₂)-Alkyl(meth)acrylat-Monomer und mindestens einen Vernetzer, der mindestens ein mehrfach ethylenisch ungesättigtes Monomer umfaßt, zu einem Kautschuksubstrat polymerisiert, danach
(b) eine Monomerenmischung in Gegenwart des Kautschuksubstrats polymerisiert, wobei mindestens eines der Monomere aus der Gruppe bestehend aus vinylaromatischen Monomeren und mindestens eines der Monomere aus der Gruppe bestehend aus einfach ethylenisch ungesättigten Nitrilmonomeren ausgewählt wird, und gegebenenfalls danach
(c) in mindestens einer nachfolgenden Stufe ein oder mehrere Monomere in Gegenwart des Kautschuksubstrats aus (b) polymerisiert, wobei das Monomer oder die Monomere mindestens ein Monomer aus der Gruppe bestehend aus (C₁-C₁₂)-Alkyl- und Aryl(meth)acrylat-Monomeren umfaßt bzw. umfassen;
wobei die Menge an nicht umgesetztem Vernetzer, die vor Schritt (b) im Kautschuksubstrat verbleibt, weniger als 5,6 Mikromol pro Gramm, bezogen auf das Trockengewicht des Kautschuksubstrats, beträgt.

2. Verfahren nach Anspruch 1, bei dem das Kautschuksubstrat ein Polymer mit Struktureinheiten, die sich von Butylacrylat ableiten, umfaßt.

3. Verfahren nach Anspruch 1, bei dem man das mehrfach ethylenisch ungesättigte Monomer aus der Gruppe bestehend aus Butylenglykoldiacrylat, Divinylbenzol, Butylenglykoldimethacrylat, Trimethylolpropantri(meth)acrylat, Allylmethacrylat, Diallylmethacrylat, Diallylmaleat, Diallylfumarat, Diallylphthalat, Triallylmethacrylat, Triallylisocyanurat, Triallylcyanurat, dem Acrylat von Tricyclodecenylalkohol und Mischungen davon auswählt.

4. Verfahren nach Anspruch 1, bei dem die elastomere Phase anfangs ein Kautschuksubstrat mit Teilchen, die aus der Gruppe bestehend aus einem Gemisch von Teilchengrößen mit mindestens zwei mittleren Teilchengrößenverteilungen und einer breiten Größenverteilung mit Teilchen mit einer Größe im Bereich von etwa 50 nm bis etwa 1000 nm ausgewählt sind, umfaßt.

5. Verfahren nach Anspruch 4, bei dem die elastomere Phase anfangs ein Kautschuksubstrat mit zwei volumenmittleren Teilchengrößenverteilungen in einem Bereich zwischen etwa 80 nm und etwa 500 nm umfaßt.

6. Verfahren nach Anspruch 1, bei dem die thermoplastische Hartphase etwa 50 bis etwa 30 Gew.-%, bezogen auf das Gesamtgewicht des ASA-Harzes, ausmacht.

7. Verfahren nach Anspruch 1, bei dem die Monomerenmischung in Schritt (b) Styrol und Acrylnitril oder alpha-Methylstyrol und Acrylnitril oder eine Mischung von Styrol, alpha-Methylstyrol und Acrylnitril umfaßt.

8. Verfahren nach Anspruch 7, bei dem das Gewichtsverhältnis von Styrol, alpha-Methylstyrol oder Mischung davon zu Acrylnitril in einem Bereich zwischen etwa 1,5:1 und etwa 4:1 liegt.

9. Verfahren zur Herstellung eines methylmethacrylatmodifizierten Acrylat/Styrol/Acrylnitril-Harzes mit etwa 35 bis etwa 80 Gew.-%, bezogen auf das Gesamtgewicht des Harzes, einer diskontinuierlichen elastomeren Phase, die in einer thermoplastischen Hartphase dispergiert ist, wobei mindestens ein Teil der thermoplastischen Hartphase auf die elastomere Phase aufgepfropft ist, bei dem man:
(a) eine Mischung, die Butylacrylat und mindestens einen Vernetzer, der mindestens ein mehrfach ethylenisch ungesättigtes Monomer umfaßt, zu dem Kautschuksubstrat polymerisiert, danach
(b) eine Monomerenmischung von Styrol und Acrylnitril in einem Gewichtsverhältnis in einem Bereich zwischen etwa 2:1 und etwa 3:1 in Gegenwart des Kautschuksubstrats polymerisiert;
wobei die Menge an nicht umgesetztem Vernetzer, die vor Schritt (b) im Kautschuksubstrat verbleibt, weniger als 5,6 Mikromol pro Gramm, bezogen auf das Trockengewicht des Kautschuksubstrats, beträgt.

10. Formmasse, umfassend ein Acrylat-Styrol-Acrylnitril-Harz (ASA-Harz) mit einer diskontinuierlichen elastomeren Phase, die in einer thermoplastischen Hartphase dispergiert ist, wobei mindestens ein Teil der thermoplastischen Hartphase auf die elastomere Phase aufgepfropft ist; wobei die thermoplastische Phase Struktureinheiten, die sich von mindestens einem vinylaromatischen Monomer, mindestens einem einfach ethylenisch ungesättigten Nitrilmonomer und gegebenenfalls mindestens einem (C₁-C₁₂)-Alkyl- und Aryl(meth)acrylat-Monomer ableiten; wobei sich die elastomere Phase von einem Kautschuksubstrat mit Struktureinheiten, die sich von mindestens einem (C₁-C₁₂)-Alkyl(meth)acrylat-Monomer und mindestens einem Vernetzer, der mindestens ein mehrfach ethylenisch ungesättigtes Monomer umfaßt, ableitet; und wobei das Kautschuksubstrat weniger als 5,6 Mikromol nicht umgesetzten Vernetzer pro Gramm Kautschuksubstrat, bezogen auf das Trockengewicht des Kautschuksubstrats vor dem Pfropfen, enthält.

## Revendications

1. Procédé de préparation d'une résine acrylique-styrène-acrylonitrile (ASA), comprenant une phase élastomère discontinue dispersée dans une phase thermoplastique rigide, où au moins une portion de la phase thermoplastique rigide est greffée sur la phase élastomère, comprenant les étapes consistant à :
(a) polymériser un mélange comprenant au moins un monomère (méth)acrylate d'alkyle en C₁-C₁₂ et au moins un agent de réticulation comprenant un monomère polyéthyléniquement insaturé pour former un substrat de caoutchouc, puis à
(b) polymériser un mélange de monomères en présence du substrat de caoutchouc, au moins l'un des monomères étant choisi parmi le groupe constitué de monomères vinylaromatiques et au moins l'un des monomères étant choisi parmi le groupe constitué de monomères nitrile monoéthyléniquement insaturés, puis éventuellement à
(c) polymériser un ou plusieurs monomères à au moins un stade subséquent en présence du substrat de caoutchouc de (b) où l'un ou plusieurs monomères comprennent au moins un monomère choisi parmi le groupe constitué de monomères (méth)acrylate d'aryle et d'alkyle en C₁-C₁₂ ;
où la quantité d'agent de réticulation n'ayant pas réagi, restant dans le substrat de caoutchouc avant l'étape (b), est inférieure à 5,6 micromoles par gramme, par rapport au poids sec du substrat de caoutchouc.

2. Procédé selon la revendication 1, dans lequel le substrat de caoutchouc comprend un polymère renfermant des motifs structuraux dérivés de l'acrylate de butyle.

3. Procédé selon la revendication 1, dans lequel le monomère polyéthyléniquement insaturé est choisi parmi le groupe constitué du diacrylate de butylèneglycol, du divinylbenzène, du diméthacrylate de butylèneglycol, du tri(méth)acrylate de triméthylolpropane, du méthacrylate d'allyle, du méthacrylate de diallyle, du maléate de diallyle, du fumarate de diallyle, du phtalate de diallyle, du méthacrylate de triallyle, de l'isocyanurate de triallyle, du cyanurate de triallyle, de l'acrylate de l'alcool tricyclodécénylique et de leurs mélanges.

4. Procédé selon la revendication 1, dans lequel la phase élastomère comprend initialement un substrat de caoutchouc avec des particules choisies parmi le groupe constitué d'un mélange de tailles de particules avec au moins deux distributions de taille de particules moyenne et une distribution de taille large avec des particules dont la taille s'échelonne d'environ 50 nm à environ 1000 nm.

5. Procédé selon la revendication 4, dans lequel la phase élastomère comprend initialement un substrat de caoutchouc avec deux distributions de taille de particules moyenne en volume, chacune dans une plage comprise entre environ 80 nm et environ 500 nm.

6. Procédé selon la revendication 1, dans lequel la phase thermoplastique rigide constitue d'environ 50 à environ 30 pour cent en poids par rapport au poids total de la résine ASA.

7. Procédé selon la revendication 1, dans lequel le mélange de monomères dans l'étape (b) comprend du styrène et de l'acrylonitrile, ou de l'alpha-méthylstyrène et de l'acrylonitrile ou un mélange de styrène, d'alpha-méthylstyrène et d'acrylonitrile.

8. Procédé selon la revendication 7, dans lequel le rapport p/p entre le styrène, l'alpha-méthylstyrène ou un mélange de ceux-ci et l'acrylonitrile est dans une plage comprise entre environ 1,5:1 et environ 4:1.

9. Procédé de préparation d'une résine acrylique/styrène/acrylonitrile modifiée par du méthacrylate de méthyle, comprenant d'environ 35 à environ 80 % en poids, par rapport au poids total de la résine, d'une phase élastomère discontinue dispersée dans une phase thermoplastique rigide, où au moins une portion de la phase thermoplastique rigide est greffée sur la phase élastomère, comprenant les étapes consistant à :
(a) polymériser un mélange comprenant de l'acrylate de butyle et au moins un agent de réticulation comprenant un monomère polyéthyléniquement insaturé pour former le substrat de caoutchouc, puis à
(b) polymériser, en présence du substrat de caoutchouc, un mélange de monomères de styrène et d'acrylonitrile en un rapport p/p dans une plage comprise entre environ 2:1 et environ 3:1 ;
où la quantité d'agent de réticulation n'ayant pas réagi, restant dans le substrat de caoutchouc avant l'étape (b), est inférieure à 5,6 micromoles par gramme, par rapport au poids sec du substrat de caoutchouc.

10. Composition de moulage comprenant une résine acrylique-styrène-acrylonitrile (ASA) comprenant une phase élastomère discontinue dispersée dans une phase thermoplastique rigide, où au moins une portion de la phase thermoplastique rigide est greffée sur la phase élastomère ; où la phase thermoplastique comprend des motifs structuraux dérivés d'au moins un monomère vinylaromatique, d'au moins un monomère nitrile monoéthyléniquement insaturé et éventuellement d'au moins un monomère (méth)acrylate d'aryle et d'alkyle en C₁-C₁₂ ; où la phase élastomère est dérivée d'un substrat de caoutchouc comprenant des motifs structuraux dérivés d'au moins un monomère (méth)acrylate d'alkyle en C₁-C₁₂ et au moins un agent de réticulation comprenant un monomère polyéthyléniquement insaturé ; et où le substrat de caoutchouc comprend moins de 5,6 micromoles d'agent de réticulation n'ayant pas réagi par gramme de substrat de caoutchouc, par rapport au poids sec du substrat de caoutchouc avant le greffage.
